# EUROPEAN PATENT APPLICATION

(11) **EP 4 576 279 A1**
(43) Date of publication of application: **25.06.2025**
(21) Application number: 23856930.5
(22) Date of filing: 06.06.2023
(51) Int. Cl.: H01M 8/021, C21D 9/46, C22C 38/00, C22C 38/40, C22C 38/58, H01M 8/0228, H01M 8/10

(54) **AUSTENITIC/FERRITIC DUAL-PHASE STAINLESS STEEL SHEET FOR FUEL CELL SEPARATOR**

(30) Priority: 22.08.2022 JP 2022132087
(71) Applicant: JFE Steel Corporation, Tokyo 100-0011 (JP)
(72) Inventor: MIZUTANI, Akito, Tokyo 100-0011 (JP); YANO, Takayoshi, Tokyo 100-0011 (JP)
(74) Representative: Haseltine Lake Kempner LLP
(86) International application number: PCT/JP2023/021047
(87) International publication number: WO 2024/042812

(57) **Abstract**

Provided is a stainless steel sheet for a fuel cell separator that combines both excellent press formability and resistance to Fe ion elution. The stainless steel sheet has a chemical composition containing, in mass%, Cr: 18.0 % to 24.0 % and Ni: 3.00 % or less. The steel microstructure includes an austenite phase and a ferrite phase, where the fraction of the austenite phase is 30 % or more and the total fraction of the austenite phase and the ferrite phase is 95 % or more. Total elongation of the stainless steel sheet is 40 % or more.

## Description

### TECHNICAL FIELD

The present disclosure relates to an austenitic/ferritic dual-phase stainless steel sheet for a fuel cell separator.

### BACKGROUND

Fuel cells are classified as phosphoric acid fuel cells, molten carbonate fuel cells, solid oxide fuel cells, alkaline fuel cells, and proton-exchange membrane fuel cells or polymer electrolyte fuel cells (hereinafter also referred to as PEFCs), according to the type of electrolyte membrane used.

Of these fuel cells, PEFCs have a relatively low operating temperature of 100 °C or less, and can be easily started and stopped. PEFCs are therefore being considered for use as onboard power sources for automobiles, stationary generators for home or commercial use, small portable generators, and the like. In particular, fuel cell vehicles (FCVs), which are powered by fuel cells, are expected to be a potential application for PEFCs.

Typically, a fuel cell includes an electrolyte membrane, electrodes, gas diffusion layers, and separators (bipolar plates). Here, graphite is often used as a separator for PEFCs. Graphite separators have the advantages of having relatively low contact resistance and not corroding. On the other hand, graphite separators have the disadvantages of being easily damaged by impact, high processing costs, and difficulty in sheet metal thinning.

Therefore, the application of metal separators that use stainless steel, titanium alloys, and the like as substrate material is being considered. Metal separators have superior formability and strength compared to graphite separators. Therefore, the use of metal separators is expected to reduce the size of fuel cells and the processing cost of separators.

Typically, separators are required to have low electrical resistance to gas diffusion layers and other separators (hereinafter also referred to as contact resistance). Further, separators are subjected to press working to form grooves that serve as flow paths for gas and coolant. Therefore, stainless steel with surface treatment to secure contact resistance, in particular austenitic stainless steel having excellent press formability such as SUS304 and SUS316L, is being considered for application as substrate material for use in metal separators.

For example, Patent Literature (PTL) 1 and PTL 2 describe separators for fuel cells that use SUS304 or SUS316L austenitic stainless steel with surface coating layers such as gold plating or carbon thin film as substrate material.

### CITATION LIST

### Patent Literature

PTL 1: JP 3854682 B2
PTL 2: JP 4147925 B2

### SUMMARY

### (Technical Problem)

In recent years, electrification of automobiles has been progressing rapidly. However, battery-powered electric vehicles (BEVs) with rechargeable secondary cells are not suitable for long-distance transportation applications and the like. Accordingly, the main applications of fuel cell vehicles (FCVs) are expected to be trucks for long-distance transportation and commercial vehicles such as buses and taxis for which travel routes are fixed and infrastructure can be easily developed.

Commercial vehicles require even greater durability and reliability than passenger cars. Therefore, fuel cell stacks installed in commercial vehicles are required to have an even longer service life. In particular, when stainless steel used in a separator is corroded by contact with water produced during the power generation reaction of the fuel cell (hereinafter also referred to as PEFC-produced water) and Fe ions are eluted, proton conductivity of the electrolyte membrane (polymer membrane) decreases and power generation performance decreases. Therefore, high-level suppression of elution of Fe ions from stainless steel used for a separator is necessary to extend the service life of a fuel cell stack.

In this regard, in the separators for fuel cells described in PTL 1 and PTL 2, the elution of Fe ions from stainless steel is suppressed to a certain degree by surface coating layers on the substrate material. However, when a defect occurs in a coating layer, Fe ions elute through the defect. In particular, when press working is carried out after a coating layer is formed on a stainless steel surface, a defect can easily occur in the coating layer, and the eluting of Fe ions through such a defect is a major problem. Further, from the viewpoints of productivity and miniaturization of fuel cells, both forming a coating layer after press working of stainless steel and making a coating layer excessively thick are undesirable. Therefore, there is a strong demand for improvement in resistance to Fe ion elution of the stainless steel sheet itself (stainless steel sheet in a state without a coating layer) used as substrate material for a fuel cell separator.

In view of the current situation described above, it would be helpful to provide a stainless steel sheet for a fuel cell separator that combines excellent press formability and resistance to Fe ion elution.

### (Solution to Problem)

In order to solve the problems described above, the inventors have made extensive studies and have made the following discoveries.
- The higher the Cr content, the better the resistance to Fe ion elution. That is, increasing the Cr content increases the stability of a passive film formed on a stainless steel sheet surface. This suppresses corrosion (dissolution) of stainless steel due to contact with acidic aqueous solution such as PEFC-produced water.
- However, excessively high Cr content decreases press formability.

Therefore, the inventors studied whether there were other means of improving resistance to Fe ion elution other than increasing the Cr content, and came to the following discoveries.
- When the Cr content is the same, the lower the Ni content, the better the resistance to Fe ion elution.
- The lower the Ni content, the smaller the fraction of austenite phase, and the less obtainable sufficient press formability becomes.
- The presence of an appropriate amount of N makes it possible to secure the fraction of austenite phase even when the Ni content is low. This makes it possible to achieve both excellent press formability and resistance to Fe ion elution.

Based on the above discoveries, the inventors further investigated and found that a stainless steel sheet having excellent press formability and resistance to Fe ion elution can be obtained by simultaneously satisfying the following conditions for chemical composition and steel microstructure.
- In chemical composition, in mass%, Cr: 18.0 % to 24.0 %, Ni: 3.00 % or less, and N: 0.100 % to 0.300 %.
- Austenitic/ferritic dual-phase stainless steel sheet. Specifically, the fraction of austenite phase is 30 % or more, and the total fraction of austenite phase and ferrite phase is 95 % or more.

Hereinafter, the austenite phase is also referred to as the y phase and the ferrite phase as the α phase. The fraction of austenite phase is also referred to as the γ-phase fraction, the fraction of ferrite phase as the α-phase fraction, and the total fraction of austenite phase and ferrite phase as the γ-phase + α-phase fraction.

The present disclosure is based on these discoveries and further studies.

Primary features of the present disclosure are as follows.
1. An austenitic/ferritic dual-phase stainless steel sheet for a fuel cell separator, comprising a chemical composition containing, in mass%,
   Cr: 18.0 % to 24.0 %,
   Ni: 3.00 % or less, and
   N: 0.100 % to 0.300 %,
   wherein,
   the steel microstructure includes an austenite phase and a ferrite phase,
   the fraction of the austenite phase is 30 % or more,
   the total fraction of the austenite phase and the ferrite phase is 95 % or more, and
   total elongation is 40 % or more.
2. The austenitic/ferritic dual-phase stainless steel sheet for a fuel cell separator according to 1, above, wherein the sheet thickness is 0.03 mm to 0.30 mm.
3. The austenitic/ferritic dual-phase stainless steel sheet for a fuel cell separator according to 1 or 2, above, further comprising a coating layer of a conductive substance on a surface.

### (Advantageous Effect)

According to the present disclosure, a stainless steel sheet for a fuel cell separator is obtainable that combines excellent press formability with resistance to Fe ion elution.

Further, the stainless steel sheet for a fuel cell separator makes it possible to produce a fuel cell stack having excellent durability and reliability, and ultimately a fuel cell vehicle (FCV).

### BRIEF DESCRIPTION OF THE DRAWINGS

In the accompanying drawings:

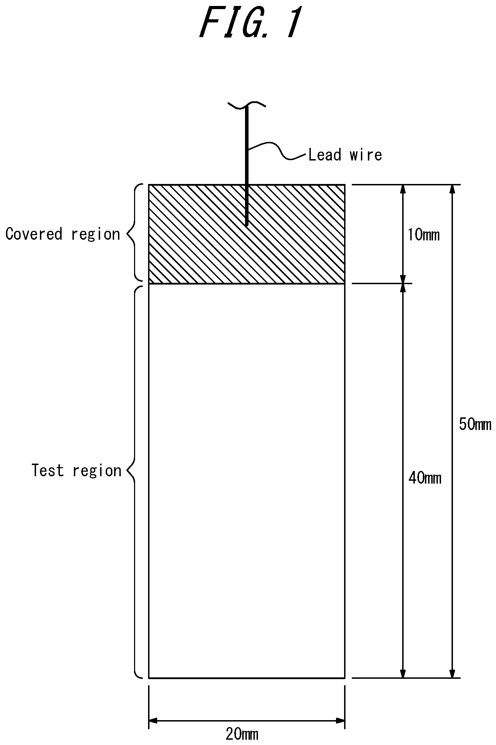

FIG. 1 is a schematic diagram of a test piece used in evaluation of resistance to Fe ion elution.

### DETAILED DESCRIPTION

### [1] Chemical composition

First, chemical composition is described for an austenitic/ferritic dual-phase stainless steel sheet for a fuel cell separator according to an embodiment of the present disclosure (hereinafter also referred to as a stainless steel sheet according to an embodiment of the present disclosure). Hereinafter, although the unit in all chemical compositions is "mass%", this may be indicated simply as "%", unless otherwise specified.

### Cr: 18.0 % to 24.0 %

Cr is an element that stabilizes a passive film of stainless steel to decrease Fe ion elution susceptibility. When Cr content is less than 18.0 %, sufficient resistance to Fe ion elution is not obtainable. On the other hand, Cr is an α-phase forming element. Therefore, when the Cr content exceeds 24.0 %, obtaining a sufficient γ-phase fraction becomes difficult. The Cr content is therefore 18.0 % to 24.0 %. The Cr content is preferably 19.0 % or more. The Cr content is more preferably 20.5 % or more. Further, the Cr content is preferably 23.0 % or less. The Cr content is more preferably 22.0 % or less.

### Ni: 3.00 % or less

Ni is an element that decreases resistance to Fe ion elution. In particular, when Ni content exceeds 3.00 %, the adverse effect on the resistance to Fe ion elution becomes more pronounced. The Ni content is therefore 3.00 % or less. The Ni content is preferably 2.50 % or less. The Ni content is more preferably 2.00 % or less. The Ni content is even more preferably 1.00 % or less. On the other hand, Ni is an element that stabilizes the y phase. To achieve this effect, the Ni content is preferably 0.10 % or more.

### N: 0.100 % to 0.300 %

N is a γ-phase forming element. That is, in place of Ni, N has an effect of stabilizing the y phase and increasing the γ-phase fraction. Further, N is an element that increases the corrosion resistance of stainless steel. To achieve these effects, N content is 0.100 % or more. On the other hand, when the N content exceeds 0.300 %, blow holes may occur when casting. Further, pressure treatment is required during melting to increase the N content in the steel, which increases production costs. The N content is therefore 0.100 % to 0.300 %. The N content is preferably 0.150 % or more. Further, the N content is preferably 0.250 % or less. The N content is more preferably 0.200 % or less.

Elements other than the above are not particularly limited as long as the steel microstructure described below is obtained. For example, a suitable chemical composition of the stainless steel sheet according to an embodiment of the present disclosure contains (consists of):
C: 0.200 % or less,
Si: 1.00 % or less,
Mn: 7.00 % or less,
P: 0.100 % or less,
S: 0.030 % or less,
Cr: 18.0 % to 24.0 %,
Ni: 3.00 % or less,
Al: 0.100 % or less,
Cu: 4.00 % or less,
Mo: 4.00 % or less, and
N: 0.100 % to 0.300 %
and, optionally, further one or more selected from the group consisting of:
   Ti: 0.50 % or less,
   Nb: 0.50 % or less,
   V: 0.50 % or less,
   Zr: 0.50 % or less,
   Sn: 0.50 % or less,
   B: 0.0100 % or less,
   Ca: 0.0100 % or less,
   Mg: 0.0100 % or less, and
   REM: 0.10 % or less,
   with the balance being Fe and inevitable impurity.

The following provides a description of the chemical composition. Cr, Ni, and N are as described above, and therefore are omitted here.

### C: 0.200 % or less

C is an element that stabilizes the y phase. To obtain this effect, C content is preferably 0.003 % or more. On the other hand, when the C content exceeds 0.200 %, the heat treatment temperature to dissolve the C becomes high, which may decrease productivity. The C content is therefore preferably 0.200 % or less. The C content is more preferably less than 0.050 %. The C content is even more preferably less than 0.030 %. The C content is even more preferably less than 0.020 %.

### Si: 1.00 % or less

Si is an element that acts as a deoxidizer. To obtain this effect, Si content is preferably 0.01 % or more. On the other hand, when the Si content exceeds 1.00 %, strength becomes excessively high and cold workability is decreased. Further, Si is an α-phase forming element. Therefore, when the Si content exceeds 1.00 %, obtaining the desired γ-phase fraction may become difficult. The Si content is therefore preferably 1.00 % or less. The Si content is more preferably 0.70 % or less. The Si content is even more preferably 0.50 % or less. The Si content is even more preferably 0.35 % or less.

### Mn: 7.00 % or less

Mn is an element that stabilizes the y phase. Further, Mn has the effects of increasing the amount of N solute in the α-phase and preventing sensitization at the α-phase grain boundary. To obtain these effects, Mn content is preferably 0.01 % or more. The Mn content is more preferably 1.00 % or more. The Mn content is even more preferably 2.00 % or more. On the other hand, when the Mn content exceeds 7.00 %, hot workability and corrosion resistance may decrease. The Mn content is therefore preferably 7.00 % or less. The Mn content is more preferably 5.00 % or less. The Mn content is even more preferably 3.50 % or less.

### P: 0.100 % or less

P is an element that decreases corrosion resistance and hot workability. When P content exceeds 0.100 %, adverse effects on corrosion resistance and hot workability become pronounced. The P content is therefore preferably 0.100 % or less. The P content is more preferably 0.070 % or less. The P content is even more preferably 0.040 % or less. The P content may be 0 %. Further, from the viewpoint of avoiding cost increases due to excessive dephosphorization, the P content is preferably 0.010 % or more.

### S: 0.030 % or less

S is an element that decreases corrosion resistance and hot workability. When S content exceeds 0.030 %, adverse effects on corrosion resistance and hot workability become pronounced. The S content is therefore preferably 0.030 % or less. The S content is more preferably 0.010 % or less. The S content is even more preferably 0.005 % or less. The S content may be 0 %. Further, from the viewpoint of avoiding cost increases due to excessive desulfurization, the S content is preferably 0.001 % or more.

### Al: 0.100 % or less

Al is an element that acts as a deoxidizer. To obtain this effect, Al content is preferably 0.001 % or more. However, when the Al content exceeds 0.100 %, nitrides form and cause surface defects. The Al content is therefore preferably 0.100 % or less. The Al content is more preferably 0.050 % or less. The Al content is even more preferably 0.015 % or less.

### Cu: 4.00 % or less

Cu is a γ-phase forming element and has an effect of increasing the γ-phase fraction. To obtain this effect, Cu content is preferably 0.01 % or more. On the other hand, when the Cu content exceeds 4.00 %, high-temperature strength increases and hot workability decreases. The Cu content is therefore preferably 4.00 % or less. The Cu content is more preferably 2.00 % or less. The Cu content is even more preferably 1.50 % or less.

### Mo: 4.00 % or less

Mo has an effect of improving corrosion resistance. To obtain this effect, Mo content is preferably 0.01 % or more. On the other hand, when the Mo content exceeds 4.00 %, high-temperature strength increases and hot workability decreases. The Mn content is therefore preferably 4.00 % or less. The Mn content is more preferably 2.00 % or less. The Mn content is even more preferably 0.50 % or less.

### Ti: 0.50 % or less

Ti has an effect of increasing the corrosion resistance of steel by preventing sensitization. Therefore, depending on required properties, for example, Ti content is preferably 0.01 % or more. However, when the Ti content exceeds 0.50 %, coarse Ti nitrides form, causing surface roughness during cold rolling and coating defects. The Ti content is therefore preferably 0.50 % or less. The Ti content is more preferably 0.20 % or less.

### Nb: 0.50 % or less

Nb has an effect of increasing the corrosion resistance of steel by preventing sensitization. Therefore, depending on required properties, for example, Nb content is preferably 0.01 % or more. However, when the Nb content exceeds 0.50 %, hot workability decreases. The Nb content is therefore preferably 0.50 % or less. The Nb content is more preferably 0.20 % or less.

### V: 0.50 % or less

V is an element that refines steel microstructure and increases strength. Therefore, depending on required properties, for example, V content is preferably 0.01 % or more. However, when the V content exceeds 0.50 %, hot workability decreases. The V content is therefore preferably 0.50 % or less. The V content is more preferably 0.20 % or less. The V content is even more preferably 0.10 % or less.

### Zr: 0.50 % or less

Zr is an element that refines steel microstructure and increases strength. Therefore, depending on required properties, for example, Zr content is preferably 0.01 % or more. However, when the Zr content exceeds 0.50 %, hot workability decreases. The Zr content is therefore preferably 0.50 % or less. The Zr content is more preferably 0.20 % or less. The Zr content is even more preferably 0.10 % or less.

### Sn: 0.50 % or less

Sn is an element effective in suppressing surface roughness during rolling and may be included as appropriate. To obtain this effect, Sn content is preferably 0.01 % or more. However, when the Sn content exceeds 0.50 %, hot workability decreases. The Sn content is therefore preferably 0.50 % or less. The Sn content is more preferably 0.20 % or less. The Sn content is even more preferably 0.10 % or less.

### B: 0.0100 % or less, Ca: 0.0100 % or less, and Mg: 0.0100 % or less

B, Ca, and Mg are all elements that improve hot workability and may be included as appropriate. To obtain this effect, B content, Ca content, and Mg content are each preferably 0.0003 % or more. However, when any of the B content, the Ca content, or the Mg content exceeds 0.0100 %, corrosion resistance decreases. Therefore, when B, Ca, and Mg are included, the content of each is preferably 0.0100 % or less. The B content, the Ca content, and the Mg content are each more preferably 0.0050 % or less.

### REM: 0.10 % or less

REM are elements that improve hot workability and may be included as needed. To obtain this effect, REM content is preferably 0.01 % or more. However, when the REM content exceeds 0.10 %, corrosion resistance is reduced. The REM content is therefore preferably 0.10 % or less. The REM content is more preferably 0.05 % or less. The term REM here refers to Sc, Y, and lanthanide elements (elements having atomic numbers from 57 to 71, such as La, Ce, Pr, Nd, and Sm).

Components other than the above are Fe and inevitable impurity. Inevitable impurity includes, for example, O (oxygen). From the viewpoint of preventing surface defects caused by inclusions, O (oxygen) is preferably controlled to be 0.05 % or less.

### [2] Steel microstructure

The steel microstructure of the stainless steel sheet according to an embodiment of the present disclosure is described below.

### γ-phase fraction: 30 % or more

As mentioned above, to achieve both excellent press formability and resistance to Fe ion elution, having appropriately controlled the Cr content, the Ni content, and the N content of the chemical composition, as described above, producing the austenitic/ferritic dual-phase stainless steel sheet is important. The γ-phase fraction is therefore 30 % or more. The γ-phase fraction is preferably 40 % or more. The γ-phase fraction is preferably 80 % or less. The γ-phase fraction is more preferably 70 % or less. The γ-phase fraction is even more preferably 60 % or less.

### γ-phase + α-phase fraction: 95 % or more

As mentioned above, to achieve both excellent press formability and resistance to Fe ion elution, having appropriately controlled the Cr content, the Ni content, and the N content of the chemical composition, as described above, producing the austenitic/ferritic dual-phase stainless steel sheet is important. The γ-phase + α-phase fraction is therefore 95 % or more. The γ-phase + α-phase fraction is preferably 97 % or more. The γ-phase + α-phase fraction is more preferably 98 % or more. The γ-phase + α-phase fraction is even more preferably 99 % or more. An upper limit of the γ-phase + α-phase fraction is not particularly limited and may be 100 %.

The α-phase fraction is preferably 20 % or more. The α-phase fraction is more preferably 30 % or more. The α-phase fraction is even more preferably 40 % or more. Further, the α-phase fraction is preferably 70 % or less. The α-phase fraction is more preferably 60 % or less. In addition, the fraction of residual microstructure other than the γ-phase and the α-phase is preferably 5 % or less. The fraction of residual microstructure is preferably 3 % or less. The fraction of residual microstructure is more preferably 2 % or less. The fraction of residual microstructure is even more preferably 1 % or less. A lower limit of the fraction of the residual microstructure is not particularly limited and may be 0 %. The residual microstructure includes, for example, precipitates such as carbides.

Here, the γ-phase fraction and γ-phase + α-phase fraction are measured according to a conventional method such as described below, for example.

First, a test piece of length: 15 mm and width: 10 mm is taken from the stainless steel sheet to be used as test material. The test piece is then embedded in resin so that a cross-section parallel to the rolling direction becomes the observation plane, and the cross-section is mirror polished. The test piece is then subjected to coloring treatment with Murakami's reagent (an aqueous solution of 10 g potassium ferricyanide, 10 g potassium hydroxide, and 100 cm³ of pure water), and the test piece is observed under an optical microscope. Due to the coloring by Murakami's reagent, only regions of the α phase are colored gray. That is, on the observation plane of the test piece, only regions of the α phase are etched and become diffusely reflective of light. Therefore, the regions of the α phase appear darker and more gray-colored than regions of the y phase. In contrast, the y phase is not colored and remains white. That is, on the observation plane of the test piece, the regions of the y phase are not etched and remain mirror-polished surfaces that appear bright. After distinguishing the regions of y phase from regions of α phase by the observation described above, the areas of these regions are calculated by image interpretation to obtain the fractions of y phase and α phase. The observation using an optical microscope is performed at a magnification of 200× for five fields of view, and the average values of the five fields of view are taken as the γ-phase fraction and the α-phase fraction, respectively. The γ-phase + α-phase fraction is the sum of the γ-phase fraction and the α-phase fraction obtained in this way. In the observation described above, residual microstructure such as precipitates are black regions and are identified separately from the y phase and the α phase.

### [3] Mechanical properties and the like

The mechanical properties and the like of the stainless steel sheet according to an embodiment of the present disclosure are described below.

### Total elongation (elongation after fracture): 40 % or more

As mentioned above, separators are typically produced by press working the substrate sheet to form grooves that serve as flow paths for gas and coolant. Therefore, the substrate sheet that serves as the material of the separator is required to have excellent press formability. Specifically, the total elongation is required to be 40 % or more. The total elongation is therefore 40 % or more.

Here, total elongation is measured by a tensile test in accordance with Japanese Industrial Standard JIS Z 2241.

The term "excellent press formability" here means that the total elongation is 40 % or more.

Further, "excellent resistance to Fe ion elution" here means that the amount of eluted Fe ions in a test solution is 70 µg/L or less in a polarization test according to the following test conditions.

### • Test conditions

Test solution: 400 mL of sulfuric acid aqueous solution having pH: 3.0 and containing 0.1 mass ppm of F⁻ (fluoride ion)
Test piece size (test piece size of region in contact with test solution): 20 mm × 40 mm
Test potential: 0.6 V vs. SSE
Testing time: 24 h

More detailed test conditions are described in the EXAMPLES section below.

### Thickness: 0.03 mm to 0.30 mm

The thickness of the stainless steel sheet for a fuel cell separator according to an embodiment of the present disclosure is preferably 0.03 mm to 0.30 mm, in terms of mounting space and mass during fuel cell stacking. When the thickness is less than 0.03 mm, the production efficiency of the stainless steel sheet decreases. On the other hand, when the thickness exceeds 0.30 mm, the mounting space and mass of a fuel cell stack increases. The thickness of the stainless steel sheet for a fuel cell separator according to an embodiment of the present disclosure is more preferably 0.05 mm or more. Further, the thickness of the stainless steel sheet for a fuel cell separator according to an embodiment of the present disclosure is more preferably 0.15 mm or less.

### [4] Coating layer of conductive substance

Further, the stainless steel sheet according to an embodiment of the present disclosure may include a coating layer of a conductive substance on a surface.

Here, the coating layer of a conductive substance is preferably made of a material that has excellent corrosion resistance and conductivity in the operating environment of a separator for a fuel cell. Suitable examples of a coating layer of a conductive substance include a metal layer, an alloy layer, a metal oxide layer, a metal carbide layer, a metal nitride layer, a carbon material layer, a conductive polymer layer, an organic resin layer containing a conductive substance, and a mixed layer of the above.

Examples of the metal layer include metal layers of Au, Ag, Cu, Pt, Pd, W, Sn, Ti, Al, Zr, Nb, Ta, Ru, Ir, and Ni. A metal layer of Au or Pt is particularly suitable.

Further, examples of the alloy layer include Sn alloy layers of Ni-Sn (Ni₃Sn₂, Ni₃Sn₄), Cu-Sn (Cu₃Sn, Cu₆Sn₅), Fe-Sn (FeSn, FeSn₂), Sn-Ag, and Sn-Co, and alloy layers of Ni-W, Ni-Cr, and Ti-Ta. An alloy layer of Ni-Sn or Fe-Sn is particularly suitable.

Further, examples of the metal oxide layer include metal oxide layers of SnO₂, ZrO₂, TiO₂, WO₃, SiO₂, Al₂O₃, Nb₂O₅, IrO₂, RuO₂, PdO₂, Ta₂O₅, Mo₂O₅, and Cr₂O₃. A metal oxide layer of TiO₂ or SnO₂ is particularly suitable.

Further, examples of the metal nitride layer and the metal carbide layer include metal nitride layers and metal carbide layers of TiN, CrN, TiCN, TiAlN, AlCrN, TiC, WC, SiC, B₄C, molybdenum nitride, CrC, TaC, and ZrN. A metal nitride layer of TiN is particularly suitable.

Further, examples of the carbon material layer include carbon material layers of graphite, amorphous carbon, diamond-like carbon, carbon black, fullerene, and carbon nanotube. A carbon material layer of graphite or diamond-like carbon is particularly suitable.

Further, examples of the conductive polymer layer include conductive polymer layers of polyaniline and polypyrrole.

Further, the organic resin layer containing a conductive substance contains at least one conductive substance selected from the group consisting of a metal or alloy, a metal oxide, a metal nitride, a metal carbide, a carbon material, or a conductive polymer of the metal layer, the alloy layer, the metal oxide layer, the metal nitride layer, the metal carbide layer, the carbon material layer, or the conductive polymer layer described above, and at least one organic resin selected from the group consisting of epoxy resin, phenol resin, polyamide-imide resin, polyester resin, polyphenylene sulfide resin, polyamide resin, urethane resin, acrylic resin, polyethylene resin, polypropylene resin, carbodiimide resin, and phenol epoxy resin. As the organic resin layer containing a conductive substance, for example, graphite-dispersed phenol resin or carbon black-dispersed epoxy resin is suitable.

As the conductive substance, a metal and a carbon material (in particular, graphite, carbon black) are suitable. The content of the conductive substance is not particularly limited, as long as a defined electrical conductivity is obtained in a fuel cell separator.

Examples of the mixed layer include a mixed layer of a TiN-dispersed Ni-Sn alloy.

### [5] Suitable production method

A suitable method of producing the stainless steel sheet for a fuel cell separator according to an embodiment of the present disclosure is described below.

For example, steel having the chemical composition described above is melted in a converter or an electric furnace and refined by vacuum oxygen decarburization (VOD) or argon oxygen decarburization (AOD). A slab is then produced by blooming or continuous casting. The slab is then heated to a temperature from 1200 °C to 1300 °C and hot rolled to produce a hot-rolled steel sheet. The hot-rolled steel sheet is then optionally subjected to hot-rolled sheet annealing at a temperature from 900 °C to 1200 °C. Hot-rolled sheet annealing may be carried out by continuous annealing and may be carried out by batch annealing. The same applies to intermediate annealing, bright annealing, and cold-rolled sheet annealing described below. Further, optionally, descaling by pickling, polishing, or the like may be carried out. For pickling, for example, sulfuric acid or a mixture of nitric acid and hydrofluoric acid may be used. Before pickling, scale may optionally be removed by shot blasting. The hot-rolled steel sheet (or hot-rolled annealed steel sheet) is then optionally subjected to cold rolling to produce a cold-rolled steel sheet. When strain hardening by cold rolling is significant, or the like, intermediate annealing may be optionally performed. The cold-rolled steel sheet may then be bright annealed at a temperature from 900 °C to 1200 °C in a non-oxidizing atmosphere as a cold-rolled sheet annealing process. Further, cold-rolled sheet annealing may be carried out in an oxidizing atmosphere instead of bright annealing. In the latter case, generated scale is preferably removed by pickling or polishing. Further, acid dipping or electrolytic etching may be carried out for surface roughening, removal of surface oxide coating, and promoting and modifying the growth of passive film.

Further, the surface of the steel sheet may be coated with a conductive coating to form a coating layer of a conductive substance. The coating layer of a conductive substance is as described under heading [4], above. Further, the conductive coating may be carried out by, for example, physical vapor deposition (PVD) using sputtering, vacuum deposition, ionization deposition, ion plating, or the like. Further, conductive coating may carried out by electroplating or hot-dip coating. Further, a plurality of conductive coatings may be combined. Further, a conductive coating may be applied after the stainless steel sheet is processed into a separator shape.

In this way, the stainless steel sheet according to an embodiment of the present disclosure can be produced.

### EXAMPLES

50 kg steel ingots having the chemical compositions listed in Table 1 (the balance being Fe and inevitable impurity) were prepared. Each steel ingot was then hot rolled to produce a hot-rolled steel sheet having a thickness of 3 mm. The hot-rolled steel sheets were then subjected to hot-rolled sheet annealing, held in a temperature range from 900 °C to 1200 °C in air for 1 min, to obtain hot-rolled annealed steel sheets. Surface scale was removed from the hot-rolled annealed steel sheets by grinder polishing. Each hot-rolled annealed steel sheet was then cold rolled to a thickness of 0.1 mm, and cold-rolled sheet annealing was applied, holding at a temperature from 900 °C to 1200 °C for 1 min in an atmosphere containing 25 vol% nitrogen and 75 vol% hydrogen, to obtain a cold-rolled annealed steel sheet. The cold-rolled annealed steel sheets were then subjected to the observation of steel microstructure as described above, and the γ-phase fractions and the γ-phase + α-phase fractions were measured. Results are listed in Table 2.

Further, (1) press formability and (2) resistance to Fe ion elution were evaluated as follows. Results are listed in Table 2.

### (1) Press formability

From each cold-rolled annealed steel sheet obtained as described above, a JIS No. 13B tensile test piece was taken so that the longitudinal direction of the tensile test piece was parallel to the rolling direction. The collected tensile test piece was then subjected to a tensile test in accordance with JIS Z 2241 at a crosshead speed of 10 mm/min to measure total elongation. Press formability was then evaluated based on the following criteria.
Pass (Excellent): total elongation 40 % or more
Fail (Poor): total elongation less than 40 %

### (2) Resistance to Fe ion elution

Polarization tests were carried out in an environment simulating the operating environment of a fuel cell separator. The resistance to Fe ion elution was then evaluated by analyzing the amount of Fe ion elution in a test solution after the test.

Specifically, 20 mm × 50 mm size test pieces were taken from cold-rolled annealed steel sheets obtained as described above. The front and back surfaces of each test piece were then polished with #800 abrasive paper. Then, for each test piece, a lead wire made of SUS304 was spot-welded to one end portion of a short side of the test piece, and the lead wire was covered with Teflon^{®} (Teflon is a registered trademark in Japan, other countries, or both) tubing. As illustrated in FIG. 1, in a 20 mm × 10 mm region at the end portion of the test piece to which the lead wire was welded, the front, back, and end surfaces were covered with NITOFLON^{®} (NITOFLON is a registered trademark in Japan, other countries, or both) tape. The 20 mm × 40 mm region (front, back, and end surfaces) other than the region covered with NITOFLON^{®} tape was then used as the test region. The test piece thus obtained was immersed in 400 mL of a sulfuric acid aqueous solution of pH 3.0 containing 0.1 mass ppm of F⁻ (fluoride ions) as a test solution and held at a potential of 0.6 V vs. SSE for 24 h. After holding, the test solution was collected and the amount of eluted Fe ions was measured by inductively coupled plasma mass spectrometry (ICP-MS) analysis. The resistance to Fe ion elution was then evaluated according to the following criteria.
Pass (Excellent): elution of Fe ions 70 µg/L or less
Fail (Poor): elution of Fe ions exceeds 70 µg/L

### [Table 1]

**Table 1**

| Steel No. | Chemical composition (mass%) | | | | | | | | | | | | Remarks |
|---|---|---|---|---|---|---|---|---|---|---|---|---|---|
| | C | Si | Mn | P | S | Cr | Ni | Al | Cu | Mo | N | Other | |
| A | 0.016 | 0.31 | 3.01 | 0.028 | 0.002 | 20.8 | 1.98 | 0.008 | 0.93 | 0.29 | 0.179 | - | Conforming steel |
| B | 0.015 | 0.32 | 3.05 | 0.031 | 0.002 | 21.1 | 2.02 | 0.009 | 1.01 | 0.32 | 0.175 | REM:0.03, Zr:0.04, Ca:0.0035, Mg:0.0011 | Conforming steel |
| C | 0.018 | 0.35 | 2.95 | 0.029 | 0.003 | 23.5 | 2.81 | 0.012 | 1.51 | 1.12 | 0.182 | Ti:0.15 | Conforming steel |
| D | 0.015 | 0.33 | 4.95 | 0.031 | 0.003 | 20.0 | 0.42 | 0.009 | 0.41 | 0.03 | 0.116 | V:0.08, Sn:0.08, B:0.0034 | Conforming steel |
| E | 0.016 | 0.29 | 5.81 | 0.029 | 0.003 | 19.5 | 0.38 | 0.008 | 0.39 | 0.04 | 0.123 | Nb:0.15 | Conforming steel |
| F | 0.035 | 0.62 | 0.88 | 0.032 | 0.003 | 18.2 | 8.08 | 0.008 | 0.02 | 0.01 | 0.035 | - | Comparative steel |
| G | 0.018 | 0.72 | 0.99 | 0.028 | 0.003 | 18.3 | 12.12 | 0.034 | 0.34 | 2.10 | 0.032 | - | Comparative steel |
| H | 0.016 | 0.37 | 0.84 | 0.028 | 0.001 | 23.5 | 6.31 | 0.018 | 0.43 | 3.04 | 0.175 | - | Comparative steel |
| I | 0.016 | 0.31 | 2.98 | 0.029 | 0.001 | 25.3 | 2.11 | 0.009 | 0.98 | 0.31 | 0.124 | - | Comparative steel |
| J | 0.019 | 0.33 | 3.03 | 0.028 | 0.002 | 21.3 | 2.08 | 0.008 | 1.01 | 0.31 | 0.038 | - | Comparative steel |
| K | 0.005 | 0.11 | 0.14 | 0.031 | 0.001 | 21.1 | 0.14 | 0.032 | 0.45 | 0.02 | 0.007 | Ti:0.32 | Comparative steel |
| L | 0.015 | 0.32 | 6.21 | 0.027 | 0.002 | 20.5 | 0.44 | 0.006 | 0.02 | 0.02 | 0.137 | - | Conforming steel |

### [Table 2]

**Table 2**

| Sample No. | Steel No. | Steel microstructure | | Evaluation result | | | | Remarks |
|---|---|---|---|---|---|---|---|---|
| | | γ-phase fraction (%) | γ-phase + α-phase fraction (%) | (1) Press formability | | (2) Resistance to Fe ion elution | | |
| | | | | Total elongation (%) | Evaluation | Amount of Fe ion elution (µg/L) | Evaluation | |
| 1 | A | 49 | 100 | 49 | Pass | 36 | Pass | Example |
| 2 | B | 52 | 100 | 51 | Pass | 35 | Pass | Example |
| 3 | C | 45 | 100 | 55 | Pass | 32 | Pass | Example |
| 4 | D | 58 | 100 | 48 | Pass | 33 | Pass | Example |
| 5 | E | 54 | 100 | 46 | Pass | 35 | Pass | Example |
| 6 | **F** | 100 | 100 | 61 | Pass | **85** | Fail | Comparative Example |
| 7 | **G** | 100 | 100 | 55 | Pass | **91** | Fail | Comparative Example |
| 8 | **H** | 51 | 100 | 41 | Pass | **81** | Fail | Comparative Example |
| 9 | **I** | **8** | 100 | **31** | Fail | 31 | Pass | Comparative Example |
| 10 | **J** | **17** | 100 | **35** | Fail | 42 | Pass | Comparative Example |
| 11 | **K** | **0** | 99 | **26** | Fail | 31 | Pass | Comparative Example |
| 12 | L | 53 | 100 | 45 | Pass | 34 | Pass | Example |

Table 2 indicates that all Examples had both excellent press formability and resistance to Fe ion elution.

In contrast, for the Comparative Example samples No. 6 to No. 8, the Ni content exceeded the appropriate range, and therefore sufficient resistance to Fe ion elution could not be obtained.

Further, for sample No. 9, the Cr content exceeded the appropriate range, and therefore the γ-phase fraction was not within the appropriate range and sufficient press formability could not be obtained.

For samples No. 10 and No. 11, the N content was not within the appropriate range, and therefore the γ-phase fraction was not within the appropriate range and sufficient press formability could not be obtained.

### INDUSTRIAL APPLICABILITY

According to the present disclosure, stainless steel sheets are obtainable that combine excellent press formability and resistance to Fe ion elution, which is extremely beneficial to the industry.

## Claims

1. An austenitic/ferritic dual-phase stainless steel sheet for a fuel cell separator, comprising a chemical composition containing, in mass%,
Cr: 18.0 % to 24.0 %,
Ni: 3.00 % or less, and
N: 0.100 % to 0.300 %
wherein,
the steel microstructure includes an austenite phase and a ferrite phase,
the fraction of the austenite phase is 30 % or more,
the total fraction of the austenite phase and the ferrite phase is 95 % or more, and
total elongation is 40 % or more.

2. The austenitic/ferritic dual-phase stainless steel sheet for a fuel cell separator according to claim 1, wherein the sheet thickness is 0.03 mm to 0.30 mm.

3. The austenitic/ferritic dual-phase stainless steel sheet for a fuel cell separator according to claim 1 or 2, further comprising a coating layer of a conductive substance on a surface.
